# EUROPEAN PATENT APPLICATION

(11) **EP 4 629 046 A1**
(43) Date of publication of application: **08.10.2025**
(21) Application number: 23912833.3
(22) Date of filing: 22.12.2023
(51) Int. Cl.: G06F 3/04842, G06F 3/0481, G06F 1/16, G06F 3/01, G06F 3/14

(54) **WEARABLE DEVICE FOR CONTROLLING AT LEAST ONE VIRTUAL OBJECT ACCORDING TO ATTRIBUTES OF AT LEAST ONE VIRTUAL OBJECT, AND METHOD FOR CONTROLLING SAME**

(30) Priority: 26.12.2022 KR 20220184311; 30.01.2023 KR 20230011620
(71) Applicant: Samsung Electronics Co., Ltd., Suwon-si, Gyeonggi-do 16677 (KR)
(72) Inventor: SON, Dongil, Suwon-si Gyeonggi-do 16677 (KR); KANG, Changtaek, Suwon-si Gyeonggi-do 16677 (KR); KIM, Sooryuh, Suwon-si Gyeonggi-do 16677 (KR)
(74) Representative: Nederlandsch Octrooibureau
(86) International application number: PCT/KR2023/021480
(87) International publication number: WO 2024/144158

(57) **Abstract**

A wearable device is configured to: use a display module to display at least one virtual object having a first shape around a first real object in the real world; use at least one sensor to identify the movement of a user wearing the wearable device; determine whether the at least one virtual object having the first shape has a movement attribute on the basis of identifying the movement of the user; and control the display module so that the at least one virtual object having the first shape is displayed by being changed to have a second shape different from the first shape on the basis of determining that the at least one virtual object having the first shape has the movement attribute, wherein the at least one virtual object having the second shape may be displayed by being moved according to the movement of the user.

## Description

### Technical Field

The disclosure relates to a wearable device and a control method thereof, which controls at least one virtual object according to the attributes of the at least one virtual object.

### Background Art

More and more services and additional functions are being provided through wearable devices such as AR glasses or video see-through (VST) devices. To meet the needs of various users and raise use efficiency of wearable devices, communication service carriers or wearable device manufacturers are jumping into competitions to develop wearable devices with differentiated and diversified functionalities. Accordingly, various functions that are provided through wearable devices are evolving more and more.

### Detailed Description of the Invention

### Technical Problem

A wearable device (e.g., glasses-type electronic device configured to augmented reality) may provide a virtual object (e.g., a virtual widget in which the execution screen of a specified application is changed into a specified shape) in the real world. The conventional art does not take into consideration a method for displaying at least one virtual object (e.g., a virtual widget) being displayed at a specified position (e.g., shown to the user wearing the wearable device) if a movement of the wearable device occurs when the wearable device provides a virtual object (e.g., a virtual widget) having a specified shape at a specified position in the real world. In other words, according to the conventional art, the virtual object disposed in the real world is controlled by the wearable device to be shown only when the user is at a specific position regardless of the user's movement after it is disposed at a specified position in the real world, causing the inconvenience of the need for the user to move to the specific position to identify the virtual object.

According to various embodiments of the disclosure, there may be provided a wearable device that, when a movement of the wearable device occurs while displaying at least one virtual object, may allowing the user wearing the wearable device to continuously interact with at least one virtual object despite the occurrence of the movement of the wearable device by changing the shape of the at least one virtual object according to the attribute of the at least one virtual object and then displaying the at least one virtual object changed to correspond to the movement of the wearable device.

According to various embodiments of the disclosure, there may be provided a method for controlling a wearable device that, when a movement of the wearable device occurs while displaying at least one virtual object, may allowing the user wearing the wearable device to continuously interact with at least one virtual object despite the occurrence of the movement of the wearable device by changing the shape of the at least one virtual object according to the attribute of the at least one virtual object and then displaying the at least one virtual object changed to correspond to the movement of the wearable device.

### Technical Solution

A wearable device according to various embodiments of the disclosure may comprise at least one sensor, a display module, and at least one processor. The at least one processor may be configured to display, using the display module, at least one virtual object having a first shape around a first real object in a real world, identify a movement of a user wearing the wearable device using the at least one sensor, determine whether the at least one virtual object having the first shape has a movement attribute based on identifying the user's movement, control the display module to display the first shape as a second shape related to the first shape, based on determining that the at least one virtual object having the first shape has the movement attribute, the second shape including a shape substantially the same as or different from the first shape, and control the display module to display at least one virtual object having the first shape around a second real object in the real world based on determining whether the movement of the user is terminated.

A method for controlling a wearable device according to various embodiments of the disclosure may comprise displaying, using a display module of the wearable device, at least one virtual object having a first shape around a first real object in a real world, identifying a movement of a user wearing the wearable device using at least one sensor of the wearable device, determining whether the at least one virtual object having the first shape has a movement attribute based on identifying the user's movement, and controlling the display module to display the first shape as a second shape related to the first shape, based on determining that the at least one virtual object having the first shape has the movement attribute. The at least one virtual object having the second shape may be moved and displayed according to the user's movement.

### Advantageous Effects

The wearable device according to various embodiments of the disclosure may, when a movement of the wearable device occurs while at least one virtual object is displayed, display at least one virtual object to correspond to the movement of the wearable device according to the attribute of the at least one virtual object, allowing the user wearing the wearable device to continuously perform interaction with the at least one virtual object despite the occurrence of the movement of the wearable device or to receive information from the virtual object.

The effects set forth herein are not limited thereto, and it is apparent to one of ordinary skill in the art that various effects may be disclosed herein.

### Brief Description of Drawings

FIG. 1 is a block diagram illustrating an electronic device in a network environment according to various embodiments of the disclosure;
FIG. 2A is a perspective view illustrating a wearable device (e.g., an electronic device) according to an embodiment of the disclosure;
FIG. 2B is a perspective view illustrating an internal configuration of a wearable device (e.g., an electronic device) according to an embodiment of the disclosure;
FIG. 2C is an exploded perspective view illustrating a wearable device (e.g., an electronic device) according to an embodiment of the disclosure;
FIGS. 2D and 2E are views illustrating a front surface and a rear surface of a wearable device (e.g., an electronic device) according to an embodiment;
FIG. 3 is an example view illustrating a function or operation in which a wearable device according to various embodiments of the disclosure changes the shape of at least one virtual object based on a movement of the wearable device and moves and displays the changed at least one virtual object according to the movement of the wearable device;
FIGS. 4A, 4B, and 4C are example views illustrating a function or operation of changing at least one virtual object (e.g., a message application execution screen) into a first shape when the at least one virtual object is moved around a first real object (e.g., a desk) according to various embodiments of the disclosure;
FIGS. 5A, 5B, and 5C are example views illustrating a function or operation in which a virtual object having a first shape is changed to a second shape based on a movement of a wearable device and then moved and displayed according to the movement of the wearable device;
FIG. 6 is an example view illustrating a function or operation of changing the shape of at least one virtual object among a plurality of virtual objects based on a movement of a wearable device and moving and displaying the changed at least one virtual object according to the movement of the wearable device;
FIGS. 7A, 7B, 7C, and 7D are example views illustrating a function or operation of moving and displaying at least one virtual object having a movement attribute among a plurality of virtual objects according to a movement of a wearable device according to various embodiments of the disclosure;
FIG. 8 is an example view illustrating a function or operation in which a wearable device according to various embodiments of the disclosure sets an attribute of at least one virtual object as a movement attribute based on obtaining a user input to a graphic element displayed around at least one virtual object;
FIGS. 9A, 9B, and 9C are example views illustrating the function or operation described in connection to FIG. 8 from a user interface perspective;
FIG. 10 is an example view illustrating a function or operation in which a wearable device according to various embodiments of the disclosure sets an attribute of a virtual object as a movement attribute based on a user input to a virtual object displayed to determine a widget to be displayed on a home screen;
FIGS. 11A, 11B, and 11C are example views illustrating the function or operation described in connection to FIG. 10 from a user interface perspective;
FIG. 12 is an example view illustrating a function or operation in which a wearable device according to various embodiments of the disclosure determines an attribute of a virtual object as a movement attribute or a non-movement attribute based on whether the shape of the virtual object is changed;
FIGS. 13A, 13B, and 13C are example views illustrating the function or operation described in connection to FIG. 12 from a user interface perspective;
FIG. 14 is an example view illustrating a function or operation in which a wearable device according to various embodiments of the disclosure changes the shape of an application execution screen based on whether the application execution screen is activated and sets the attribute of the application execution screen having the changed shape as a movement attribute;
FIGS. 15A, 15B, and 15C are example views illustrating the function or operation described in connection to FIG. 14 from a user interface perspective;
FIG. 16 is an example view illustrating a function or operation in which a wearable device according to various embodiments of the disclosure stops displaying a changed application execution screen based on obtaining a movement cancellation gesture; and
FIGS. 17A and 17B are example views illustrating a function or operation described in connection to FIG. 16 from a user interface perspective.

### Mode for Carrying out the Invention

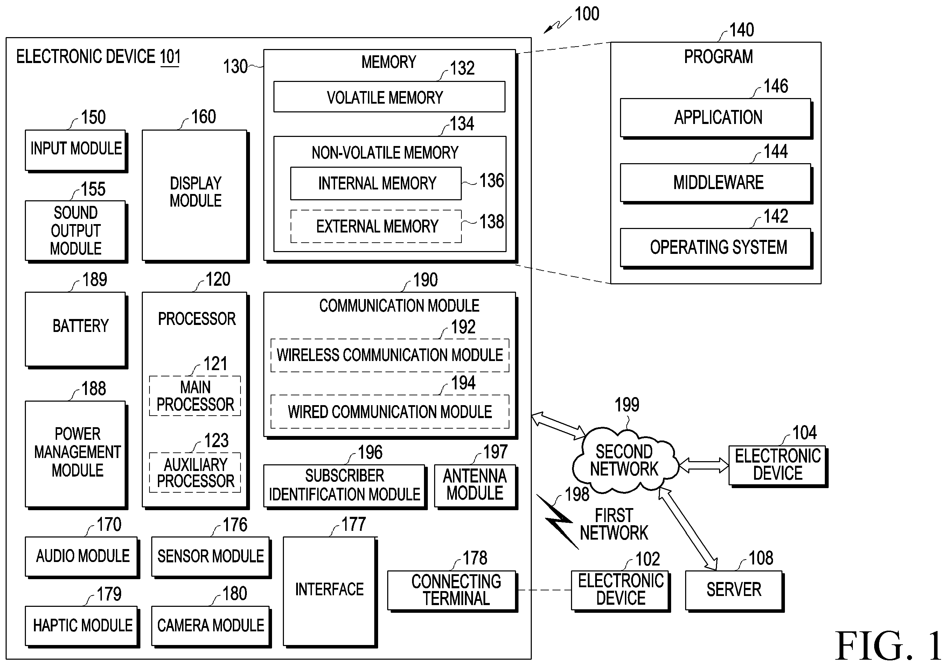

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a specified high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

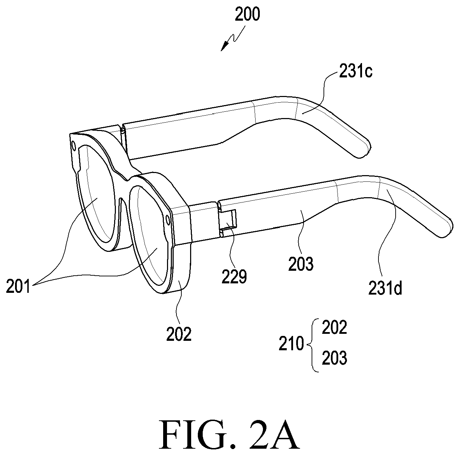

FIG. 2A is a perspective view illustrating a wearable device 200 according to various embodiments of the disclosure.

Referring to FIG. 2A, the wearable device 200 may be a glasses-type electronic device, and the user may visually recognize her surrounding objects or environment while wearing the wearable device 200. For example, the wearable device 200 may be a head-mounted device (HMD) or smart glasses capable of providing images directly in front of the user's eyes. The configuration of the wearable device 200 of FIG. 2A may be identical in whole or part to the configuration of the electronic device 101 of FIG. 1.

According to various embodiments, the wearable device 200 may include a housing that forms the exterior of the wearable device 200. The housing 210 may provide a space in which components of the wearable device 200 may be disposed. For example, the housing 210 may include a lens frame 202 and at least one wearing member 203.

According to various embodiments, the wearable device 200 may include a display member 201 capable of providing the user with visual information. For example, the display member 201 may include a module equipped with a lens, a display, a waveguide, and/or a touch circuit. According to an embodiment, the display member 201 may be transparent or semi-transparent. According to an embodiment, the display member 201 may include a semi-transparent glass or a window member the light transmittance of which may be adjusted as the coloring concentration is adjusted. According to an embodiment, a pair of display members 201 may be provided and disposed to correspond to the user's left and right eyes, respectively, with the wearable device 200 worn on the user's body.

According to various embodiments, the lens frame 202 may receive at least a portion of the display member 201. For example, the lens frame 202 may surround at least a portion of the display member 201. According to an embodiment, the lens frame 202 may position at least one of the display members 201 to correspond to the user's eye. According to an embodiment, the lens frame 202 may be the rim of a normal eyeglass structure. According to an embodiment, the lens frame 202 may include at least one closed loop surrounding the display devices 201.

According to various embodiments, the wearing members 203 may extend from the lens frame 202. For example, the wearing members 203 may extend from ends of the lens frame 202 and, together with the lens frame 202, may be supported and/or positioned on a part (e.g., ears) of the user's body. According to an embodiment, the wearing members 203 may be rotatably coupled to the lens frame 202 through hinge structures 229. According to an embodiment, the wearing member 203 may include an inner side surface 231c configured to face the user's body and an outer side surface 231d opposite to the inner side surface.

According to various embodiments, the wearable device 200 may include the hinge structures 229 configured to fold the wearing members 203 on the lens frame 202. The hinge structure 229 may be disposed between the lens frame 202 and the wearing member 203. While the wearable device 200 is not worn, the user may fold the wearing members 203 on the lens frame 202 to carry or store the electronic device.

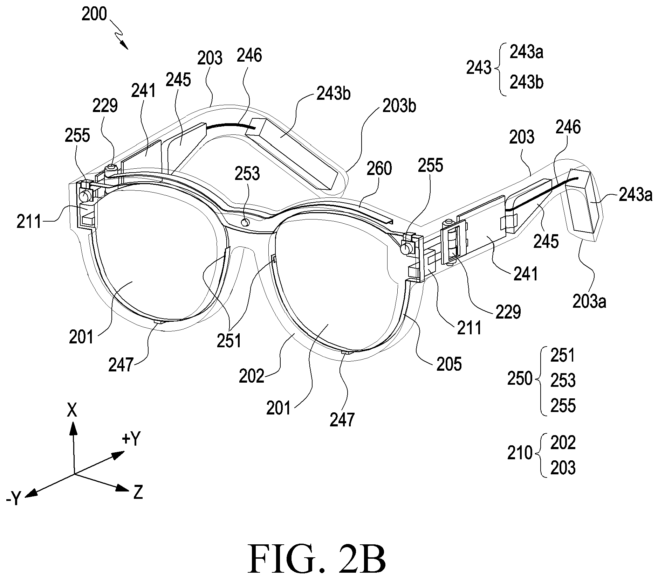

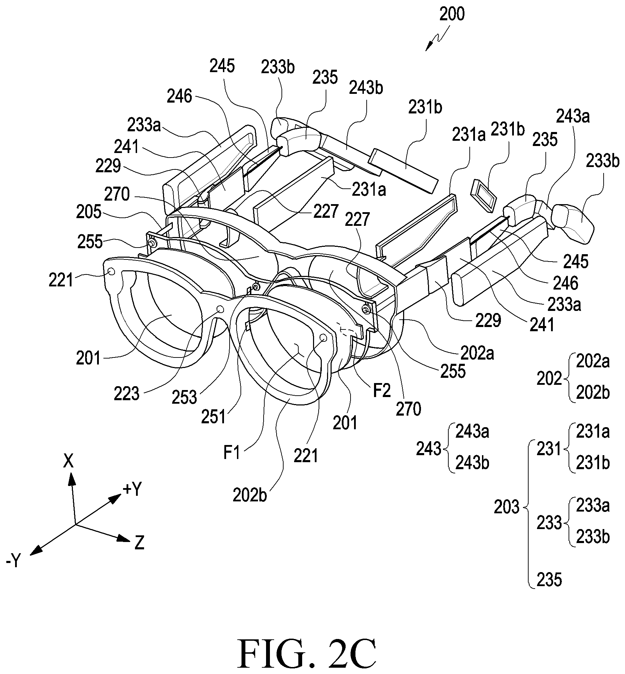

FIG. 2B is a perspective view illustrating an internal configuration of a wearable device according to an embodiment of the disclosure. FIG. 2C is an exploded perspective view illustrating a wearable device according to an embodiment of the disclosure.

Referring to FIGS. 2B and 2C, a wearable device 200 may include components received in the housing 210 (e.g., at least one circuit board 241 (e.g., printed circuit board (PCB), printed board assembly (PBA), flexible PCB, or rigid-flexible PCB (RFPCB)), at least one battery 243, at least one speaker module 245, at least one power transfer structure 246, and/or a camera module 250). The configuration of the housing 210 of FIG. 2B may be identical in whole or part to the configuration of the display member 201, the lens frame 202, the wearing members 203, and the hinge structures 229 of FIG. 2A.

According to various embodiments, the wearable device 200 may obtain and/or recognize a visual image regarding an object or environment in the direction (e.g., -Y direction) in which the wearable device 200 faces or the direction in which the user gazes, using the camera module 250 (e.g., the camera module 180 of FIG. 1) and may receive information regarding the object or environment from an external electronic device (e.g., the electronic device 102 or 104 or the server 108 of FIG. 1) through a network (e.g., the first network 198 or second network 199 of FIG. 1). In an embodiment, the wearable device 200 may provide the received object- or environment-related information, in the form of an audio or visual form, to the user. The wearable device 200 may provide the received object- or environment-related information, in a visual form, to the user through the display members 201, using the display module (e.g., the display module 160 of FIG. 1). For example, the wearable device 200 may implement augmented reality (AR) by implementing the object- or environment-related information in a visual form and combining it with an actual image of the user's surrounding environment.

According to various embodiments, the display member 201 may include a first surface F1 facing in a direction (e.g., -y direction) in which external light is incident and a second surface F2 facing in a direction (e.g., +y direction) opposite to the first surface F1. With the user wearing the wearable device 200, at least a portion of the light or image coming through the first surface F1 may be incident on the user's left eye and/or right eye through the second surface F2 of the display member 201 disposed to face the user's left eye and/or right eye.

According to various embodiments, the lens frame 202 may include at least two or more frames. For example, the lens frame 202 may include a first frame 202a and a second frame 202b. According to an embodiment, when the user wears the wearable device 200, the first frame 202a may be a frame of the portion facing the user's face, and the second frame 202b may be a portion of the lens frame 202 spaced from the first frame 202a in the gazing direction (e.g., -Y direction) in which the user gazes.

According to various embodiments, the light output module 211 may provide an image and/or video to the user. For example, the light output module 211 may include a display panel (not shown) capable of outputting images and a lens (not shown) corresponding to the user's eye and guiding images to the display member 201. For example, the user may obtain the image output from the display panel of the light output module 211 through the lens of the light output module 211. According to various embodiments, the light output module 211 may include a device configured to display various information. For example, the light output module 211 may include at least one of a liquid crystal display (LCD), a digital mirror device (DMD), a liquid crystal on silicon (LCoS), or an organic light emitting diode (OLED), or a micro light emitting diode (micro LED). According to an embodiment, when the light output module 211 and/or the display member 201 includes one of an LCD, a DMD, or an LCoS, the wearable device 200 may include a light output module 211 and/or a light source emitting light to the display area of the display member 201. According to an embodiment, when the light output module 211 and/or the display member 201 may include OLEDs or micro LEDs, the wearable device 200 may provide virtual images to the user without a separate light source.

According to various embodiments, at least a portion of the light output module 211 may be disposed in the housing 210. For example, the light output module 211 may be disposed in the wearing member 203 or the lens frame 202 to correspond to each of the user's right eye and left eye. According to an embodiment, the light output module 211 may be connected to the display member 201 and may provide images to the user through the display member 201.

According to various embodiments, the circuit board 241 may include components for driving the wearable device 200. For example, the circuit board 241 may include at least one integrated circuit chip. Further, at least one of the processor 120, the memory 130, the power management module 188, or the communication module 190 of FIG. 1 may be provided in the integrated circuit chip. According to an embodiment, a circuit board 241 may be disposed in the wearing member 203 of the housing 210. According to an embodiment, the circuit board 241 may be electrically connected to the battery 243 through the power transfer structure 246. According to an embodiment, the circuit board 241 may be connected to the flexible printed circuit board 205 and may transfer electrical signals to the electronic components (e.g., the light output module 211, the camera module 250, and the light emitting unit) of the electronic device through the flexible printed circuit board 205. According to an embodiment, the circuit board 241 may be a circuit board including an interposer.

According to various embodiments, the flexible printed circuit board 205 may extend from the circuit board 241 through the hinge structure 229 to the inside of the lens frame 202 and may be disposed in at least a portion of the inside of the lens frame 202 around the display member 201.

According to various embodiments, the battery 243 (e.g., the battery 189 of FIG. 1) may be connected with components (e.g., the light output module 211, the circuit board 241, and the speaker module 245, the microphone module 247, and/or the camera module 250) of the wearable device 200 and may supply power to the components of the wearable device 200.

According to various embodiments, at least a portion of the battery 243 may be disposed in the wearing member 203. According to an embodiment, batteries 243 may be disposed in ends 203a and 203b of the wearing members 203. For example, the batteries 243 may include a first battery 243a disposed in a first end 203a of the wearing member 203 and a second battery 243b disposed in a second end 203b of the wearing member 203.

According to various embodiments, the speaker module 245 (e.g., the audio module 170 or the sound output module 155 of FIG. 1) may convert an electrical signal into sound. At least a portion of the speaker module 245 may be disposed in the wearing member 203 of the housing 210. According to an embodiment, the speaker module 245 may be located in the wearing member 203 to correspond to the user's ear. For example, the speaker module 245 may be disposed between the circuit board 241 and the battery 243.

According to various embodiments, the power transfer structure 246 may transfer the power from the battery 243 to an electronic component (e.g., the light output module 211) of the wearable device 200. For example, the power transfer structure 246 may be electrically connected to the battery 243 and/or the circuit board 241, and the circuit board 241 may transfer the power received through the power transfer structure 246 to the light output module 211. According to an embodiment, the power transfer structure 246 may be connected to the circuit board 241 through the speaker module 245. For example, when the wearable device 200 is viewed from a side (e.g., in the Z-axis direction), the power transfer structure 246 may at least partially overlap the speaker module 245.

According to various embodiments, the power transfer structure 246 may be a component capable of transferring power. For example, the power transfer structure 246 may include a flexible printed circuit board or wiring. For example, the wiring may include a plurality of cables (not shown). In various embodiments, various changes may be made to the shape of the power transfer structure 246 considering the number and/or type of the cables.

According to various embodiments, the microphone module 247 (e.g., the input module 150 and/or the audio module 170 of FIG. 1) may convert a sound into an electrical signal. According to an embodiment, the microphone module 247 may be disposed in at least a portion of the lens frame 202. For example, at least one microphone module 247 may be disposed on a lower end (e.g., in the -X-axis direction) and/or on an upper end (e.g., in the X-axis direction) of the wearable device 200. According to various embodiments, the wearable device 200 may more clearly recognize the user's voice using voice information (e.g., sound) obtained by the at least one microphone module 247. For example, the wearable device 200 may distinguish the voice information from the ambient noise based on the obtained voice information and/or additional information (e.g., low-frequency vibration of the user's skin and bones). For example, the wearable device 200 may clearly recognize the user's voice and may perform a function of reducing ambient noise (e.g., noise canceling). The microphone module 247 according to various embodiments of the disclosure may include a plurality of microphone modules 247 to perform beamforming. The microphone module 247 according to various embodiments of the disclosure may include a non-directional or directional microphone.

According to various embodiments, the camera module 250 may capture a still image and/or a video. The camera module 250 may include at least one of a lens, at least one image sensor, an image signal processor, or a flash. According to an embodiment, the camera module 250 may be disposed in the lens frame 202 and may be disposed around the display member 201.

According to various embodiments, the camera module 250 may include at least one first camera module 251. According to an embodiment, the first camera module 251 may capture the trajectory of the user's eye (e.g., a pupil) or gaze. For example, the first camera module 251 may capture the reflection pattern of the light emitted by the light emitting unit to the user's eyes. For example, the light emitting unit may emit light in an infrared band for tracking the trajectory of the gaze using the first camera module 251. For example, the light emitting unit may include an IR LED. According to an embodiment, the processor (e.g., the processor 120 of FIG. 1) may adjust the position of the virtual image so that the virtual image projected on the display member 201 corresponds to the direction in which the user's pupil gazes. According to an embodiment, the first camera module 251 may include a global shutter (GS)-type camera. It is possible to track the trajectory of the user's eyes or gaze using a plurality of third camera modules 251 having the same specifications and performance.

According to various embodiments, the first camera module 251 may periodically or aperiodically transmit information related to the trajectory of the user's eye or gaze (e.g., trajectory information) to the processor (e.g., the processor 120 of FIG. 1). According to an embodiment, when the first camera module 251 detects a change in the user's gaze based on the trajectory information (e.g., when the user's eyes move more than a reference value with the head positioned still), the first camera module 251 may transmit the trajectory information to the processor.

According to various embodiments, the camera modules 250 may include at least one second camera module 253. According to an embodiment, the second camera module 253 may capture an external image. According to an embodiment, the second camera module 253 may be a global shutter-type or rolling shutter (RS)-type camera. According to an embodiment, the second camera module 253 may capture an external image through the second optical hole 223 formed in the second frame 202b. For example, the second camera module 253 may include a high-resolution color camera, and it may be a high resolution (HR) or photo video (PV) camera. Further, the second camera module 253 may provide an auto-focus (AF) function and an optical image stabilizer (OIS) function.

According to various embodiments, the wearable device 200 may include a flash (not shown) positioned adjacent to the second camera module 253. For example, the flash (not shown) may provide light for increasing brightness (e.g., illuminance) around the wearable device 200 when an external image is obtained by the second camera module 253, thereby reducing difficulty in obtaining an image due to the dark environment, the mixing of various light beams, and/or the reflection of light.

According to various embodiments, the camera modules 250 may include at least one third camera module 255. According to an embodiment, the third camera module 255 may capture the user's motion through a first optical hole 221 formed in the lens frame 202. For example, the third camera module 255 may capture the user's gesture (e.g., hand gesture). Third camera modules 255 and/or first optical holes 221 may be disposed on two opposite sides of the lens frame 202 (e.g., the second frame 202b), e.g., formed in two opposite ends of the lens frame 202 (e.g., the second frame 202b) with respect to the X direction. According to an embodiment, the third camera module 255 may be a global shutter (GS)-type camera. For example, the third camera module 255 may be a camera supporting 3DoF (degrees of freedom) or 6DoF, which may provide position recognition and/or motion recognition in a 360-degree space (e.g., omni-directionally). According to an embodiment, the third camera modules 255 may be stereo cameras and may perform the functions of simultaneous localization and mapping (SLAM) and user motion recognition using a plurality of global shutter-type cameras with the same specifications and performance. According to an embodiment, the third camera module 255 may include an infrared (IR) camera (e.g., a time of flight (TOF) camera or a structured light camera). For example, the IR camera may be operated as at least a portion of a sensor module (e.g., the sensor module 176 of FIG. 1) for detecting a distance from the subject.

According to an embodiment, at least one of the first camera module 251 or the third camera module 255 may be replaced with a sensor module (e.g., the sensor module 176 of FIG. 1) (e.g., lidar sensor). For example, the sensor module may include at least one of a vertical cavity surface emitting laser (VCSEL), an infrared sensor, and/or a photodiode. For example, the photodiode may include a positive intrinsic negative (PIN) photodiode or an avalanche photodiode (APD). The photodiode may be referred to as a photo detector or a photo sensor.

According to an embodiment, at least one of the first camera module 251, the second camera module 253, and the third camera module 255 may include a plurality of camera modules (not shown). For example, the second camera module 253 may include a plurality of lenses (e.g., wide-angle and telephoto lenses) and image sensors and may be disposed on one surface (e.g., a surface facing in the -Y axis) of the wearable device 200. For example, the wearable device 200 may include a plurality of camera modules having different properties (e.g., angle of view) or functions and control to change the angle of view of the camera module based on the user's selection and/or trajectory information. At least one of the plurality of camera modules may be a wide-angle camera and at least another of the plurality of camera modules may form a telephoto camera.

According to various embodiments, the processor (e.g., processor 120 of FIG. 1) may determine the motion of the wearable device 200 and/or the user's motion using information for the wearable device 200 obtained using at least one of a gesture sensor, a gyro sensor, or an acceleration sensor of the sensor module (e.g., the sensor module 176 of FIG. 1) and the user's action (e.g., approach of the user's body to the wearable device 200) obtained using the second camera module 253. According to an embodiment, in addition to the above-described sensor, the wearable device 200 may include a magnetic (geomagnetic) sensor capable of measuring an orientation using a magnetic field and magnetic force lines and/or a hall sensor capable of obtaining motion information (e.g., moving direction or distance) using the strength of a magnetic field. For example, the processor may determine the motion of the wearable device 200 and/or the user's motion based on information obtained from the magnetic (geomagnetic) sensor and/or the hall sensor.

According to various embodiments (not shown), the wearable device 200 may perform an input function (e.g., a touch and/or pressure sensing function) capable of interacting with the user. For example, a component configured to perform a touch and/or pressure sensing function (e.g., a touch sensor and/or a pressure sensor) may be disposed in at least a portion of the wearing member 203. The wearable device 200 may control the virtual image output through the display member 201 based on the information obtained through the components. For example, a sensor associated with a touch and/or pressure sensing function may be configured in various types, e.g., a resistive type, a capacitive type, an electro-magnetic (EM) type, or an optical type. According to an embodiment, the component configured to perform the touch and/or pressure sensing function may be identical in whole or part to the configuration of the input module 150 of FIG. 1.

According to various embodiments, the wearable device 200 may including a reinforcing member 260 that is disposed in an inner space of the lens frame 202 and formed to have a higher rigidity than that of the lens frame 202.

According to various embodiments, the wearable device 200 may include a lens structure 270. The lens structure 270 may refract at least a portion of light. For example, the lens structure 270 may be a prescription lens having refractive power. According to an embodiment, the lens structure 270 may be disposed behind (e.g., +Y direction) the second window member of the display member 201. For example, the lens structure 270 may be positioned between the display member 201 and the user's eye. For example, the lens structure 270 may face the display member.

According to various embodiments, the housing 210 may include a hinge cover 227 that may conceal a portion of the hinge structure 229. Another part of the hinge structure 229 may be received or hidden between an inner case 231 and an outer case 233, which are described below.

According to various embodiments, the wearing member 203 may include the inner case 231 and the outer case 233. The inner case 231 may be, e.g., a case configured to face the user's body or directly contact the user's body, and may be formed of a material having low thermal conductivity, e.g., a synthetic resin. According to an embodiment, the inner case 231 may include an inner side surface (e.g., the inner side surface 231c of FIG. 2A) facing the user's body. The outer case 233 may include, e.g., a material (e.g., a metal) capable of at least partially transferring heat and may be coupled to the inner case 231 to face each other. According to an embodiment, the outer case 233 may include an outer side surface (e.g., the outer side surface 231d of FIG. 2A) opposite to the inner side surface 331c. In an embodiment, at least one of the circuit board 241 or the speaker module 245 may be received in a space separated from the battery 243 in the wearing member 203. In the illustrated embodiment, the inner case 231 may include a first case 231a including the circuit board 241 or the speaker module 245 and a second case 231b receiving the battery 243, and the outer case 233 may include a third case 233a coupled to face the first case 231a and a fourth case 233b coupled to face the second case 231b. For example, the first case 231a and the third case 233a may be coupled (hereinafter, 'first case portions 231a and 233a') to receive the circuit board 241 and/or the speaker module 245, and the second case 231b and the fourth case 233b may be coupled (hereinafter, 'second case portions 231b and 233b') to receive the battery 343.

According to various embodiments, the first case portions 231a and 233a may be rotatably coupled to the lens frame 202 through the hinge structure 229, and the second case portions 231b and 233b may be connected or mounted to the ends of the first case portions 231a and 233a through the connecting member 235. In some embodiments, a portion of the connecting member 235 in contact with the user's body may be formed of a material having low thermal conductivity, e.g., an elastic material, such as silicone, polyurethane, or rubber, and another portion thereof which does not come into contact with the user's body may be formed of a material having high thermal conductivity (e.g., a metal). For example, when heat is generated from the circuit board 241 or the battery 243, the connecting member 235 may block heat transfer to the portion in contact with the user's body while dissipating or discharging heat through the portion not in contact with the user's body. According to an embodiment, a portion of the connecting member 235 configured to come into contact with the user's body may be interpreted as a portion of the inner case 231, and a portion of the connecting member 235 that does not come into contact with the user's body may be interpreted as a portion of the outer case 233. According to an embodiment (not shown), the first case 231a and the second case 231b may be integrally configured without the connecting member 235, and the third case 233a and the fourth case 233b may be integrally configured without the connecting member 235. According to various embodiments, other components (e.g., the antenna module 197 of FIG. 1) may be further included in addition to the illustrated components, and information regarding an object or environment may be received from an external electronic device (e.g., the electronic device 102 or 104 or server 108 of FIG. 1) through a network (e.g., the first network 198 or second network 199 of FIG. 1) using the communication module 190.

Although only the wearable device 200 is illustrated and described in FIGS. 2A to 2C, the present invention is not limited thereto, and some components of the wearable device 200 illustrated in FIGS. 2A to 2C may be included in electronic devices, such as smartphones and tablet PCs.

The wearable device 200 according to various embodiments of the disclosure may identify whether the user 210 is wearing the wearable device 100 through a proximity sensor included in the wearable device 200. Alternatively the wearable device 200 according to various embodiments of the disclosure may determine whether the wearable device 200 is worn on the user 210 according to whether the frame of the wearable device 200 is unfolded (e.g., the unfolded state) and whether the approach of the user 210 is detected while the frame of the wearable device 200 is unfolded, through the angle sensor provided on the hinge portion of the wearable device 200.

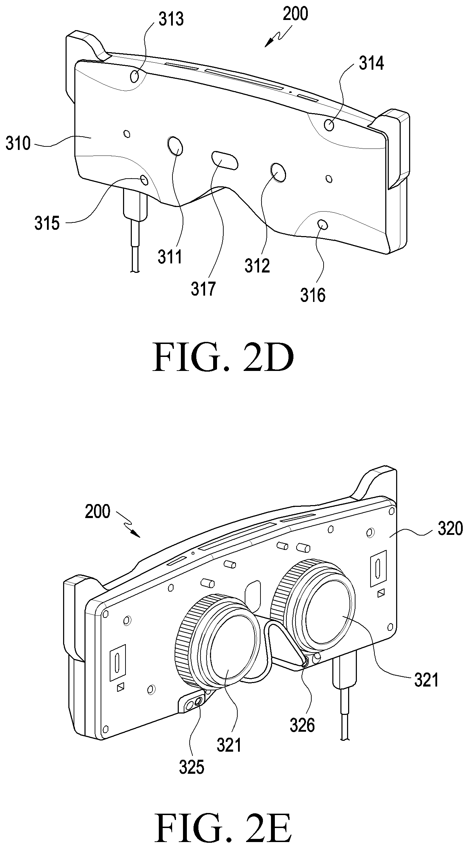

FIGS. 2D and 2E are views illustrating a front surface and a rear surface of a wearable device 200 according to an embodiment.

Referring to FIGS. 2D and 2E, in an embodiment, camera modules 311, 312, 313, 314, 315, and 316 and/or a depth sensor 317 for obtaining information related to the surrounding environment of the wearable device 200 may be disposed on a first surface 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The image obtained through the camera modules 313, 314, 315, and 316 may be used for simultaneous localization and mapping (SLAM), 6 degrees of freedom (6DoF), 3 degrees of freedom (3DoF), subject recognition, and/or tracking, and may be used as an input of the wearable electronic device by recognizing and/or tracking the user's hand.

In an embodiment, the depth sensor 317 may be configured to transmit a signal and receive a signal reflected from an object and be used for identifying the distance to the object, such as time of flight (TOF).

According to an embodiment, camera modules 325 and 326 for face recognition and/or a display 321 (and/or lens) may be disposed on the second surface 320 of the housing.

In an embodiment, the face recognition camera modules 325 and 326 adjacent to the display may be used for recognizing the user's face or may recognize and/or track both eyes of the user.

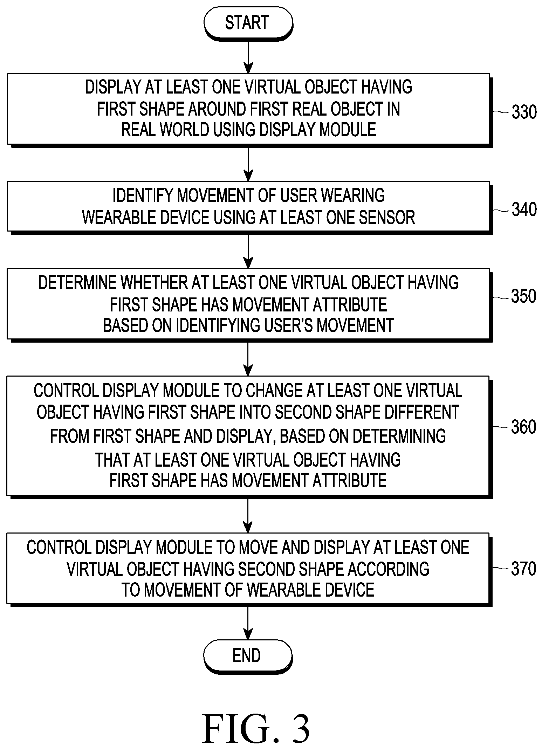

In an embodiment, the display 321 (and/or lens) may be disposed on the second surface 320 of the wearable device 200. In an embodiment, the wearable device 200 may not include the camera modules 315 and 316 among the plurality of camera modules 313, 314, 315, and 316. Although not shown in FIGS. 3A and 3B, the wearable device 200 may further include at least one of the components shown in FIG. 2.

As described above, according to an embodiment, the wearable device 200 may have a form factor to be worn on the user's head. The wearable device 200 may further include a strap and/or a wearing member (e.g., the wearing member 203) to be fixed on the user's body part. The wearable device 200 may provide the user experience based on augmented reality, virtual reality, and/or mixed reality while worn on the user's head.

FIG. 3 is an example view illustrating a function or operation in which the wearable device 200 according to various embodiments of the disclosure changes the shape of at least one virtual object (e.g., the message application execution screen 410) based on the movement of the wearable device 200 and moves and displays the changed at least one virtual object (e.g., the first widget 430) according to the movement of the wearable device 200.

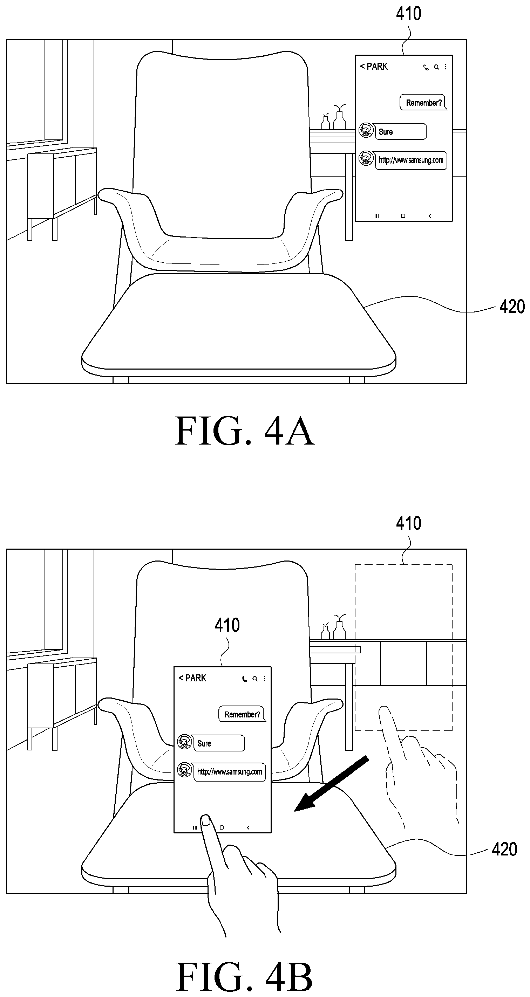

Referring to FIG. 3, in operation 330, the wearable device 200 according to various embodiments of the disclosure may display at least one virtual object (e.g., the first widget 430) having a first shape around a first real object 420 (e.g., a desk) in the real world using a display module (e.g., the light output module 211). FIGS. 4A to 4C are example views illustrating a function or operation of changing the shape of at least one virtual object (e.g., the message application execution screen 410) into the first shape when at least one virtual object (e.g., the message application execution screen 410) is moved around the first real object 420 (e.g., a desk) according to various embodiments of the disclosure. As illustrated in FIG. 4A, the wearable device 200 according to various embodiments of the disclosure may display at least one virtual object (e.g., the message application execution screen 410) at a specified position in the real world. The specified position where at least one virtual object (e.g., the message application execution screen 410) is displayed according to various embodiments of the disclosure may be a position spaced apart from the real object 420 by a specified distance. The wearable device 200 according to various embodiments of the disclosure may identify the shape of the real object 420 using at least one camera (e.g., the second camera module 253 and/or the third camera module 255) and obtain distance information from the wearable device 200. The wearable device 200 according to various embodiments of the disclosure may identify the type of the real object 420 by comparing the image of the real object 420 obtained by the wearable device 200 (e.g., the second camera module 253 and/or the third camera module 255) with an image stored in the wearable device 200 or an external device (e.g., a server). Alternatively, the wearable device 200 according to various embodiments of the disclosure may identify a specific place or position when the wearable device 200 is in the specific place or position, identify the direction in which the wearable device 200 faces in the identified specific place or position, and identify the type of at least one real object 420 positioned in the direction in which the wearable device 200 faces. To this end, the wearable device 200 or the external device (e.g., a server) according to various embodiments of the disclosure may store position information about at least one real object 420 disposed in the specific place or position. The wearable device 200 according to various embodiments of the disclosure may identify the type of the real object 420 positioned in a specific direction using position information about the real object 420 and the direction in which the wearable device 200 faces at the current position. Further, various techniques in which the wearable device 200 identifies the real object 420 in the real world may be applied to various embodiments of the disclosure.

According to an embodiment of the disclosure, the wearable device 200 may determine whether at least one virtual object (e.g., the message application execution screen 410) is close to a real object 420 (e.g., whether at least one virtual object (e.g., the message application execution screen 410) is positioned on the real object 420) by comparing the coordinate information about the at least one virtual object (e.g., the message application execution screen 410) displayed within the field of view of the wearable device 200 with the coordinate information on the image of the real object 420 identified based on the image obtained by at least one camera (e.g., the second camera module 253 and/or third camera module 255). According to an embodiment of the disclosure, the wearable device 200 may know both the display position of the real object 420 and the display position of the at least one virtual object (e.g., the message application execution screen 410) on the image obtained by the at least one camera (e.g., the second camera module 253 and/or the third camera module 255) and, thus, determine whether the at least one virtual object (e.g., the message application execution screen 410) is close to a real object 420 (e.g., whether at least one virtual object (e.g., the message application execution screen 410) is positioned on the real object 420) based on the image obtained by the at least one camera (e.g., the second camera module 253 and/or the third camera module 255). Further, various algorithms for determining whether the virtual object and the real object 420 are close may be applied to various embodiments of the disclosure.

According to an embodiment of the disclosure, the wearable device 200 may obtain a user input to move the at least one virtual object (e.g., the message application execution screen 410) around the real object 420, as illustrated in FIG. 4B. The user input according to various embodiments of the disclosure may include a virtual drag input for moving the at least one virtual object (e.g., the message application execution screen 410) around the real object 420. When it is determined that an image for a body portion (e.g., the right hand) of the user obtained using at least one camera (e.g., the second camera module 253 and/or the third camera module 255) overlaps at least a portion of the at least one virtual object (e.g., the message application execution screen 410) or when a finger movement for selecting the at least one virtual object (e.g., the message application execution screen 410) in the overlapping state is detected, the wearable device 200 according to various embodiments of the disclosure may determine that a virtual touch input to the at least one virtual object (e.g., the message application execution screen 410) is detected. The wearable device 200 according to various embodiments of the disclosure may determine that a virtual drag input is obtained when a gesture of moving in a specified direction is detected while touching the at least one virtual object (e.g., the message application execution screen 410). According to another embodiment of the disclosure, it may be determined whether the virtual drag input is obtained through a separate device (e.g., a sensor in the user's hand) for detecting the virtual drag input. According to another embodiment of the disclosure, it may use a plurality of cameras to identify coordinates in the space where the user's fingertip is positioned, and determine whether a virtual drag input is obtained according to whether the identified coordinates in the space match (e.g., included in the area formed by the coordinates) the coordinates in the space where the at least one virtual object (e.g., the message application execution screen 410) is displayed. Further, various algorithms (e.g., an artificial intelligence model algorithm) for detecting a virtual drag input may be applied to various embodiments of the disclosure.

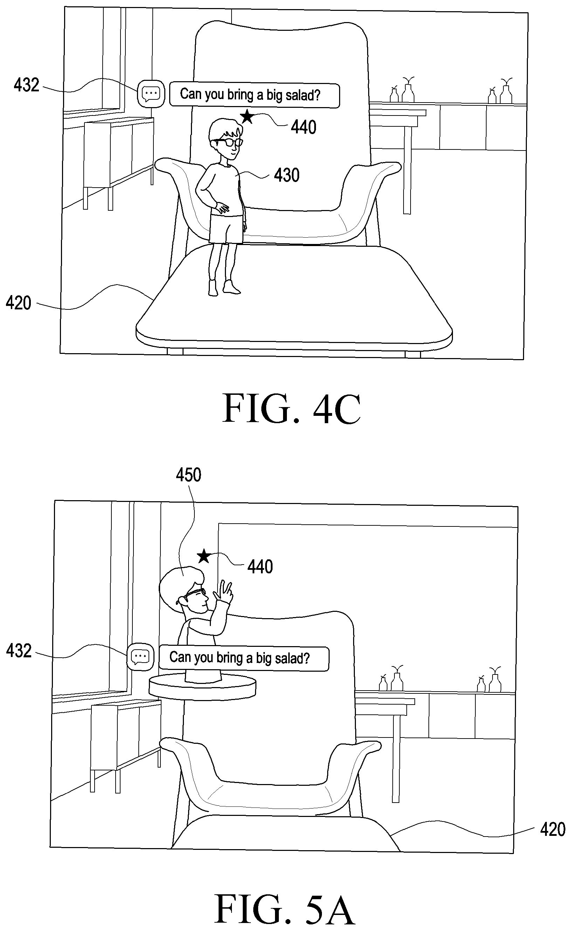

According to an embodiment of the disclosure, when determining that the at least one virtual object (e.g., the message application execution screen 410) is positioned on the real object 420, the wearable device 200 may change the shape of at least one virtual object (e.g., the message application execution screen 410) into the first shape (e.g., a human shape) (e.g., changes into the first widget) and display it as a virtual object, as illustrated in FIG. 4C. The term "widget" mentioned in the disclosure may mean a graphic user interface (GUI) tool having a specified size for operating an application program on an operating system in the wearable device 200 and displaying the result on the screen. In an embodiment, if a user input (e.g., a virtual touch input) is obtained for at least one widget, the wearable device 200 may interchangeably or additionally display the execution screen of the application corresponding to the at least one widget with at least one widget. According to an embodiment of the disclosure, a first notification 432 including information about an event (e.g., the content of the message received from the counterpart) generated in association with the first widget 430 and a first indicator 440 indicating an attribute (e.g., a movement (follow) attribute or a non-movement (non-follow) attribute) of the first widget 430 may be displayed as a virtual object around the first widget 430. FIG. 4C illustrates an embodiment in which the first indicator 440 is displayed as a virtual object based on the first widget 430 according to various embodiments of the disclosure being set as a widget having the movement attribute.

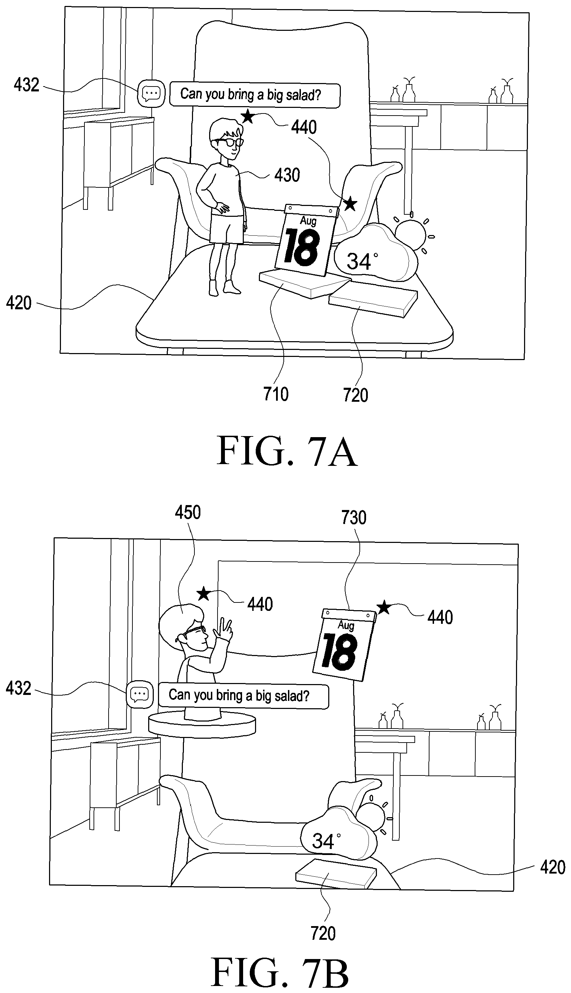

According to an embodiment of the disclosure, the "movement attribute" may mean an attribute in which at least one widget (e.g., the first widget 430 or the second widget 450) is moved and displayed based on the movement of the wearable device 200 (e.g., a change in the posture of the user wearing the wearable device 200 or a movement from a specified place to another specified place). The "non-movement attribute" according to various embodiments of the disclosure may mean an attribute in which at least one widget (e.g., the fourth widget 720 of FIG. 7A) maintains the display state at a specified position (e.g., a specified position on the real object 420) even when the movement of the wearable device 200 is identified. The wearable device 200 according to various embodiments of the disclosure may control the display module (e.g., the light output module 211) to fix and display the widget (e.g., the second widget 450) having the movement attribute at a specified position of the field of view of the wearable device 200 to move and display the widget (e.g., the second widget 450) having the movement attribute according to the movement of the wearable device 200. When the movement of the wearable device 200 is identified, the wearable device 200 according to various embodiments of the disclosure does not display the widget (e.g., the first widget 430) having the movement attribute and, when the movement of the wearable device 200 is terminated (e.g., when the user wearing the wearable device 200 moves from the first specified place to the second specified place), display a list of at least one widget (e.g., the first widget 430 and the third widget 710 of FIG. 7A) having the movement attribute as a virtual object. The wearable device 200 according to various embodiments of the disclosure may display at least one widget (e.g., the first widget 430 and the third widget 710) having the movement attribute as a virtual object according to the user's selection input (e.g., a virtual touch input) to the displayed list. The wearable device 200 according to various embodiments of the disclosure may display information about an event generated in association with at least one widget having the movement attribute together with at least one widget (e.g., the second widget 450) having the second shape even while the wearable device 200 is moving. The wearable device 200 according to various embodiments of the disclosure may change and display the shape and/or color of the at least one virtual object (e.g., the first widget 430) having the first shape based on a user input, or may further display an additional object (e.g., a graphic element (e.g., a check box, etc.) for setting an attribute). The wearable device 200 according to various embodiments of the disclosure may change the shape of the at least one virtual object (e.g., the message application execution screen 410) (e.g., changes into an icon shape) and display the changed at least one virtual object in the real world to be fixed and displayed (e.g., body-locked and displayed) according to the user's gaze.

The wearable device 200 according to various embodiments of the disclosure may identify a movement of the user wearing the wearable device 200 using at least one sensor (e.g., a gyro sensor, an acceleration sensor, and/or a GPS sensor) in operation 340. The wearable device 200 according to various embodiments of the disclosure may determine whether the posture of the user wearing the wearable device 200 has changed (e.g., whether it has changed from a state of sitting in a chair to a standing state) or whether it has moved out of a specific position (e.g., whether it has moved out of the library) using data detected by at least one sensor (e.g., gyro sensor, acceleration sensor, and/or GPS sensor). The wearable device 200 according to various embodiments of the disclosure may use various positioning algorithms (e.g., ① positioning algorithm using "image matching," ② positioning algorithm using "marker recognition," and/or ③ positioning algorithm using the strength of wireless communication signals such as Wi-Fi) to determine whether the user wearing the wearable device 200 has left a specific position (e.g., library).

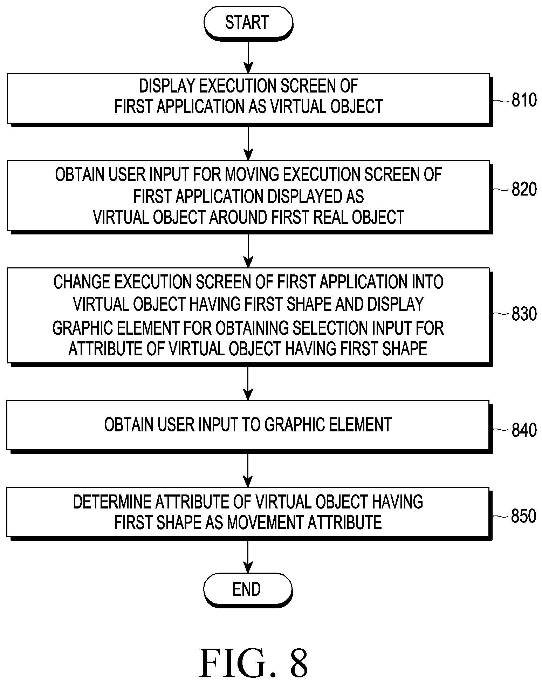

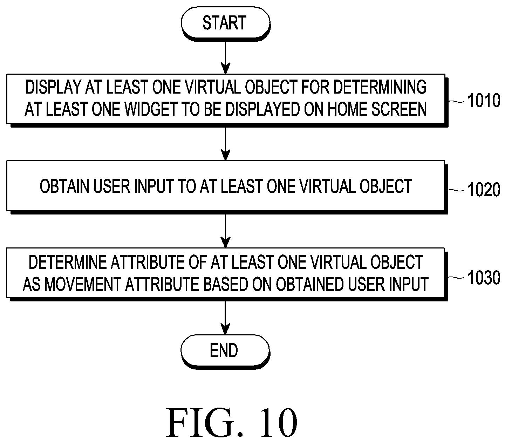

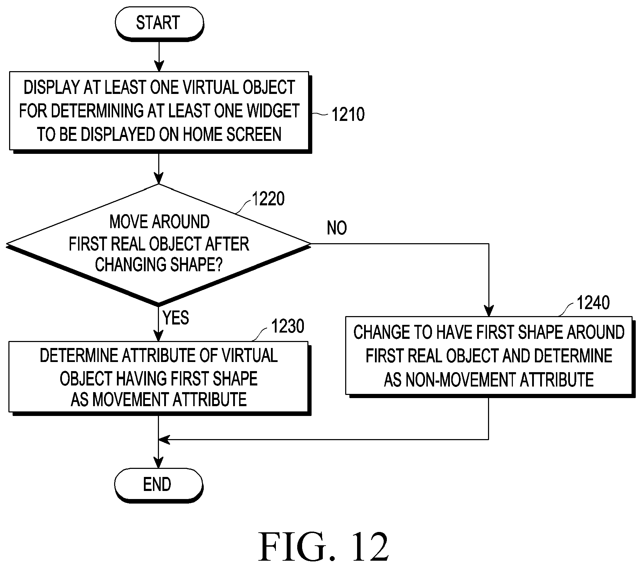

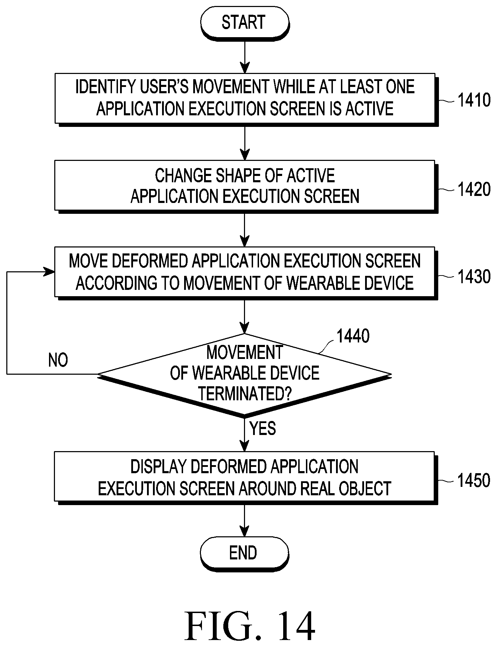

The wearable device 200 according to various embodiments of the disclosure may determine whether the at least one virtual object (e.g., the first widget 430) having the first shape has the movement attribute based on identifying the movement of the user wearing the wearable device 200 in operation 350. The attributes of the at least one widget according to various embodiments of the disclosure may be determined (e.g., determined as the "movement attribute") according to at least one of a method in which it is determined based on obtaining a user input to a graphic element displayed around at least one virtual object (e.g., the function or operation illustrated in FIG. 8), a method in which it is determined based on a user input to a virtual screen for determining a widget displayed on the home screen (e.g., the function or operation illustrated in FIG. 10), a method in which it is determined based on whether the virtual object is changed and then moved onto the real object 420 (e.g., the function or operation illustrated in FIG. 12), a method in which it is determined based on whether the application execution screen is activated (e.g., the function or operation illustrated in FIG. 14), and/or a method in which it is determined based on a user gesture for the widget (e.g., the fourth widget 720) having the non-movement attribute. The wearable device 200 according to various embodiments of the disclosure may determine whether the at least one widget has the "movement attribute" or the "non-movement attribute" based on the specified value (e.g., the flag value indicating whether it is the movement attribute or the non-movement attribute) stored in association with the at least one widget. In FIG. 3, operation 330 is illustrated as performed after operation 320, but according to various embodiments of the disclosure, operation 330 may be performed before operation 320 or may be performed substantially simultaneously with operation 320.

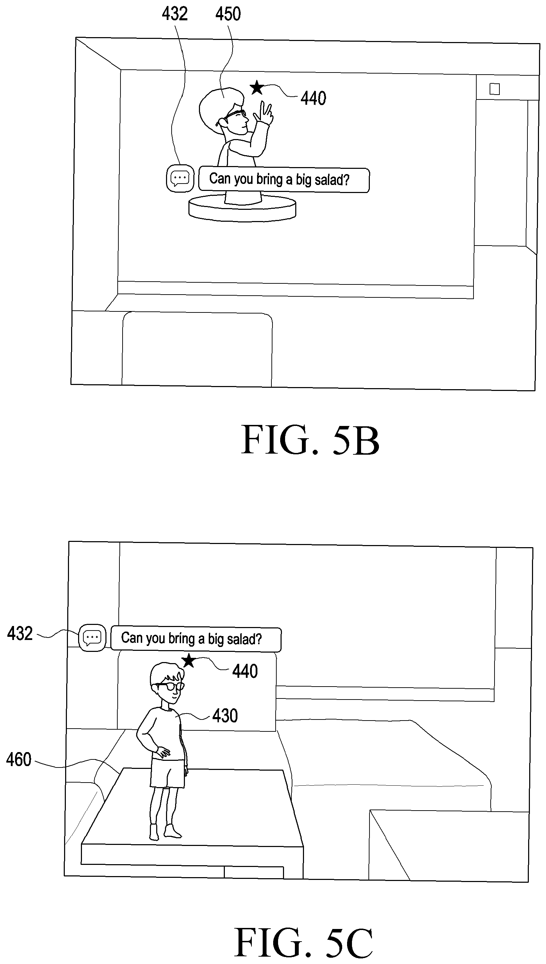

The wearable device 200 according to various embodiments of the disclosure may control the display module (e.g., the light output module 211) so that the at least one virtual object (e.g., the first widget 430) having the first shape is changed into the second shape different from the first shape and displayed (e.g., displayed as he second widget 450) based on determining that at least one virtual object (e.g., the first widget 430) having the first shape has the movement attribute in operation 360. The wearable device 200 according to various embodiments of the disclosure may control the display module (e.g., the light output module 211) so that the at least one virtual object (e.g., the second widget 450) having the second shape is moved and displayed according to the movement of the wearable device 200 in operation 370. FIGS. 5A to 5C are example views illustrating a function or operation in which a virtual object (e.g., the first widget 420) having a first shape is changed to a second shape based on a movement of a wearable device 200 and then moved and displayed according to the movement of the wearable device 200. The wearable device 200 according to various embodiments of the disclosure may control the display module (e.g., the light output module 211) so that the at least one virtual object (e.g., the first widget 430) having the first shape is changed into the second shape different from the first shape and displayed (e.g., displayed as the second widget 450) when determining that the posture of the user wearing the wearable device 200 is changed (e.g., changed from a state of sitting in a chair to a standing state) as illustrated in FIG. 5A. The second shape according to various embodiments of the disclosure may be a shape previously specified (e.g., at the time of manufacturing the wearable device 200) or a shape specified by the user of the wearable device 200. The wearable device 200 according to various embodiments of the disclosure may display information (e.g., the first notification 432) about the event generated in association with at least one widget (e.g., the second widget 450) having the movement attribute, together with at least one widget (e.g., the second widget 450) having the second shape even while the wearable device 200 is on the move. The wearable device 200 according to various embodiments of the disclosure may control the display module (e.g., the light output module 211) to fix and display the widget (e.g., the second widget 450) having the movement attribute at a specified position of the field of view of the wearable device 200 to move and display the widget (e.g., the second widget 450) having the movement attribute according to the movement of the wearable device 200 while the wearable device 200 moves as illustrated in FIG. 5B.

The wearable device 200 according to various embodiments of the disclosure may change the shape of the at least one virtual object (e.g., the message application execution screen 410 and/or the first widget 430) (e.g., changes into an icon shape) and display the changed at least one virtual object (e.g., an icon) in the real world or in at least a partial area within the field of view of the user to be fixed and displayed (e.g., body-locked and displayed) according to the user's gaze. Based on detecting that the movement of the wearable device 200 is terminated, the wearable device 200 according to various embodiments of the disclosure may stop (e.g., instead of the changed at least one virtual object (e.g., an icon)) displaying the changed at least one virtual object (e.g., an icon) around another real object (e.g., a desk as the second real object 460) having the same or similar attribute (e.g., whether the real object has a plane with a specified area or more) to the first real object 420 (e.g., a desk) and display at least one virtual object (e.g., the message application execution screen 410 and/or the first widget 430) having the specified shape.

The wearable device 200 according to various embodiments of the disclosure may determine whether the movement of the wearable device 200 is terminated using at least one sensor (e.g., a gyro sensor, an acceleration sensor, and/or a GPS sensor). When the movement of the wearable device 200 is terminated, the wearable device 200 according to various embodiments of the disclosure may determine whether another real object (e.g., a desk, as the second real object 460) having the same or similar attribute (e.g., whether the real object has a plane with a specified area or more) to the first real object 420 (e.g., a desk) is present based on an image obtained through at least one camera (e.g., the second camera module 253 and/or the third camera module 255). The wearable device 200 according to various embodiments of the disclosure may display the at least one virtual object (e.g., the first widget 430) having the first shape around the second real object 460 (e.g., on the second real object 460) when there is another real object having the same or similar attribute (e.g., whether the real object has a plane with a specified area or more) to the first real object 420 (e.g., a desk) as illustrated in FIG. 5C. Through the functions or operations according to various embodiments of the disclosure as described above, the user of the wearable device 200 may continuously feel the user experience provided by the at least one widget despite the user's movement.

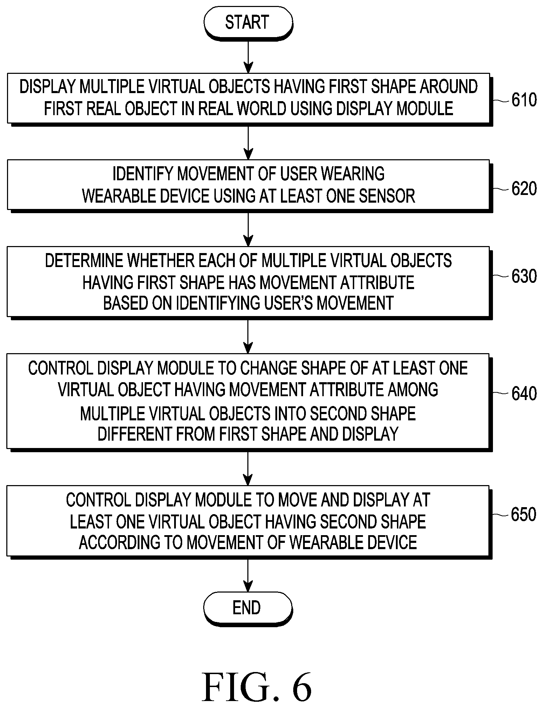

FIG. 6 is an example view illustrating a function or operation of changing the shape of at least one virtual object (e.g., the first widget 430 and the third widget 710) among a plurality of virtual objects (e.g., the first widget 430, the third widget 710, and/or the fourth widget 720) based on a movement of a wearable device 200 and moving and displaying the changed at least one virtual object (e.g., the first widget 430 and the third widget 710) according to the movement of the wearable device 200. FIGS. 7A to 7D are example views illustrating a function or operation of moving and displaying at least one virtual object (e.g., the first widget 430 and the third widget 710) having a movement attribute among a plurality of virtual objects (e.g., the first widget 430, the third widget 710, and/or the fourth widget 720) according to a movement of a wearable device 200 according to various embodiments of the disclosure.

In operation 610, the wearable device 200 according to various embodiments of the disclosure may display a plurality of virtual objects (e.g., the first widget 430, the third widget 710, and/or the fourth widget 720) having the first shape around the first real object 420 in the real world using the display module. Referring to FIG. 7A, the plurality of virtual objects (e.g., the first widget 430, the third widget 710, and/or the fourth widget 720) having the first shape may include a virtual object (e.g., the first widget 430 and the third widget 710) having the movement attribute or a virtual object (e.g., a fourth widget 720) having the non-movement attribute. The third widget 710 according to various embodiments of the disclosure may be a widget corresponding to a calendar application, and the fourth widget 720 according to various embodiments of the disclosure may be a widget corresponding to a weather application. FIG. 7A illustrates an embodiment in which the first indicator 440 is displayed as a virtual object around each of the first widget 430 and the third widget 710 according to various embodiments of the disclosure are set as widgets having the movement attribute.

The wearable device 200 according to various embodiments of the disclosure may identify a movement of the user wearing the wearable device 200 using at least one sensor (e.g., a gyro sensor, an acceleration sensor, and/or a GPS sensor) according to various embodiments of the disclosure in operation 620. The wearable device 200 according to various embodiments of the disclosure may determine whether the posture of the user wearing the wearable device 200 has changed (e.g., whether it has changed from a state of sitting in a chair to a standing state) or whether it has moved out of a specific position (e.g., whether it has moved out of the library) using data detected by at least one sensor (e.g., gyro sensor, acceleration sensor, and/or GPS sensor). The wearable device 200 according to various embodiments of the disclosure may use various positioning algorithms (e.g., ① positioning algorithm using "image matching," ② positioning algorithm using "marker recognition," and/or ③ positioning algorithm using the strength of wireless communication signals such as Wi-Fi) to determine whether the user wearing the wearable device 200 has left a specific position (e.g., library).

In operation 630, the wearable device 200 according to various embodiments of the disclosure may determine whether each of a plurality of virtual objects (e.g., the first widget 430, the third widget 710, and/or the fourth widget 720) having the first shape has the movement attribute based on identifying the user's movement. The wearable device 200 according to various embodiments of the disclosure may determine whether the at least one widget has the "movement attribute" or the "non-movement attribute" based on the specified value (e.g., the flag value indicating whether it is the movement attribute or the non-movement attribute) stored in association with the at least one widget. In FIG. 6, operation 630 is illustrated as performed after operation 620, but according to various embodiments of the disclosure, operation 630 may be performed before operation 620 or may be performed substantially simultaneously with operation 620.

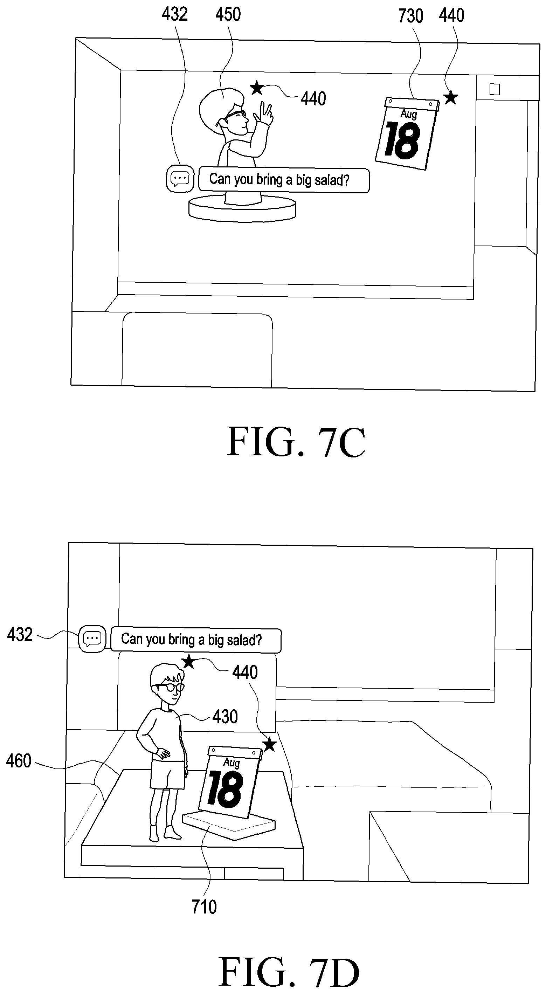

In operation 640, the wearable device 200 according to various embodiments of the disclosure may control the display module (e.g., the light output module 211) so that the shape of the at least one virtual object (e.g., the first widget 430 and/or the third widget 710) having the movement attribute among the plurality of virtual objects (e.g., the first widget 430, the third widget 710, and/or the fourth widget 720) is changed into the second shape different from the first shape and displayed. The wearable device 200 according to various embodiments of the disclosure may control the display module (e.g., the light output module 211) so that the at least one virtual object (e.g., the first widget 430 and/or the third widget 710) having the second shape is moved and displayed according to the movement of the wearable device 200 in operation 650. FIGS. 7B to 7D are example views illustrating a function or operation in which a virtual object (e.g., the first widget 430 and/or the third widget 710) having a first shape is changed to a second shape based on a movement of a wearable device 200 and then moved and displayed according to the movement of the wearable device 200. The wearable device 200 according to various embodiments of the disclosure may control the display module (e.g., the light output module 211) so that the at least one virtual object (e.g., the first widget 430 and/or the third widget 710) having the movement attribute is changed into the second shape different from the first shape and displayed (e.g., displayed as the second widget 450 and the fifth widget 730, respectively) when determining that the posture of the user wearing the wearable device 200 is changed (e.g., changed from a state of sitting in a chair to a standing state) as illustrated in FIG. 7B. The second shape according to various embodiments of the disclosure may be a shape previously specified (e.g., at the time of manufacturing the wearable device 200) or a shape specified by the user of the wearable device 200. The wearable device 200 according to various embodiments of the disclosure may display information (e.g., the first notification 432) about the event generated in association with at least one widget (e.g., the second widget 450 and the fifth widget 730) having the movement attribute, together with at least one widget (e.g., the second widget 450) having the second shape even while the wearable device 200 is on the move. The wearable device 200 according to various embodiments of the disclosure may control the display module (e.g., the light output module 211) to fix and display the widget (e.g., the second widget 450 and the fifth widget 730) having the movement attribute at a specified position of the field of view of the wearable device 200 to move and display the widget (e.g., the second widget 450 and the fifth widget 730) having the movement attribute according to the movement of the wearable device 200 while the wearable device 200 moves as illustrated in FIG. 7C.

The wearable device 200 according to various embodiments of the disclosure may determine whether the movement of the wearable device 200 is terminated using at least one sensor (e.g., a gyro sensor, an acceleration sensor, and/or a GPS sensor). When the movement of the wearable device 200 is terminated, the wearable device 200 according to various embodiments of the disclosure may determine whether another real object (e.g., a desk, as the second real object 460) having the same or similar attribute (e.g., whether the real object has a plane with a specified area or more) to the first real object 420 (e.g., a desk) is present based on an image obtained through at least one camera (e.g., the second camera module 253 and/or the third camera module 255). The wearable device 200 according to various embodiments of the disclosure may display the at least one virtual object (e.g., the first widget 430 and/or the third widget 710) having the movement attribute around the second real object 460 (e.g., on the second real object 460) when there is another real object having the same or similar attribute (e.g., whether the real object has a plane with a specified area or more) to the first real object 420 (e.g., a desk) as illustrated in FIG. 7D.

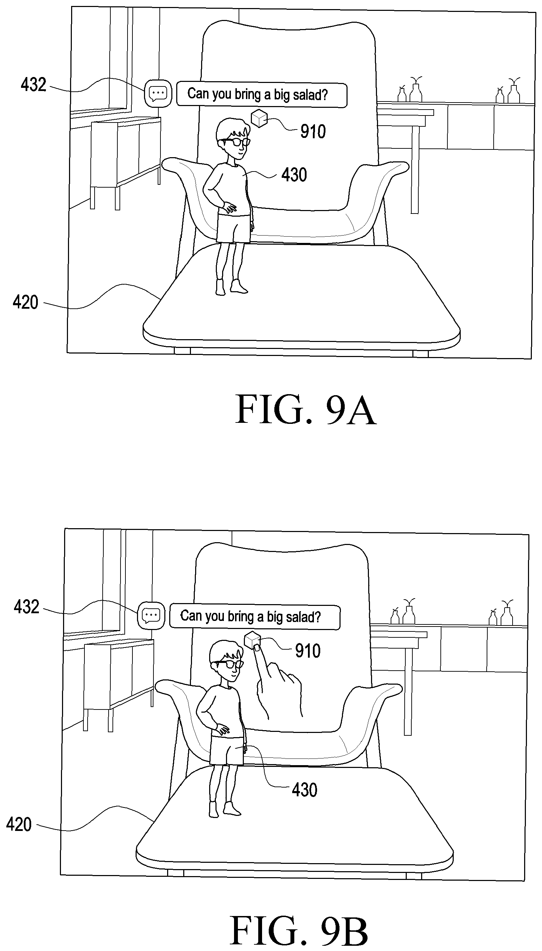

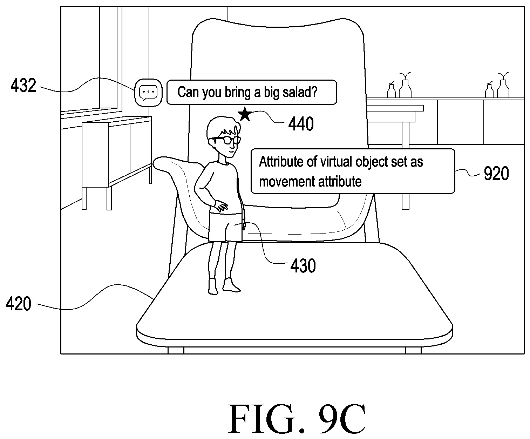

FIG. 8 is an example view illustrating a function or operation in which a wearable device 200 according to various embodiments of the disclosure sets an attribute of at least one virtual object (e.g., the first widget 430) as a movement attribute based on obtaining a user input to a graphic element 910 displayed around at least one virtual object (e.g., the first widget 430). FIGS. 9A to 9C are exemplary views illustrating the function or operation described in FIG. 8 from the perspective of a user interface.

Referring to FIG. 8, in operation 810, the wearable device 200 according to various embodiments of the disclosure may display the execution screen 410 of the first application (e.g., a message application) as a virtual object. As illustrated in FIG. 4A, the wearable device 200 according to various embodiments of the disclosure may display the execution screen 410 of the first application (e.g., a message application) as a virtual object.

In operation 810, the wearable device 200 according to various embodiments of the disclosure may obtain a user input for moving the execution screen 410 of the first application displayed as the virtual object around the first real object 420. According to various embodiments of the disclosure, e.g., the user input may include a virtual drag input. In an embodiment, when it is determined that an image for a body portion (e.g., the right hand) of the user obtained using at least one camera (e.g., the second camera module 253 and/or the third camera module 255) overlaps at least a portion of the at least one virtual object (e.g., the message application execution screen 410) or when a finger movement for selecting the at least one virtual object (e.g., the message application execution screen 410) in the overlapping state is detected, the wearable device 200 may determine that a virtual touch input to the at least one virtual object (e.g., the message application execution screen 410) is detected. For example, the wearable device 200 according to various embodiments of the disclosure may determine that a virtual drag input is obtained when a gesture of moving in a specified direction is detected while touching the at least one virtual object (e.g., the message application execution screen 410).

In operation 830, the wearable device 200 according to various embodiments of the disclosure may change the execution screen 410 of the first application to a virtual object (e.g., the first widget 430) having the first shape, and display a graphic element 910 for obtaining a selection input for an attribute of a virtual object (e.g., the first widget 430) having the first shape. As illustrated in FIG. 9A, the wearable device 200 according to various embodiments of the disclosure may display a graphic element 910 (e.g., a check box) for obtaining a user input (e.g., a virtual touch input) as a virtual object around the virtual object (e.g., the first widget 430) having the first shape.

The wearable device 200 according to various embodiments of the disclosure may obtain a user input to the graphic element 910 in operation 840. The wearable device 200 according to various embodiments of the disclosure may obtain a user input (e.g., a virtual touch input) to the graphic element 910, as illustrated in FIG. 9B.

In operation 850, the wearable device 200 according to various embodiments of the disclosure may determine the attribute of the virtual object (e.g., the first widget 430) having the first shape as the movement attribute. When the user input according to operation 840 is obtained, the wearable device 200 according to various embodiments of the disclosure may display a notification (e.g., the second notification 920) indicating that the attribute of the virtual object (e.g., the first widget 430) is set as the movement attribute and the first indicator 400 as a virtual object around the virtual object (e.g., the first widget 430).

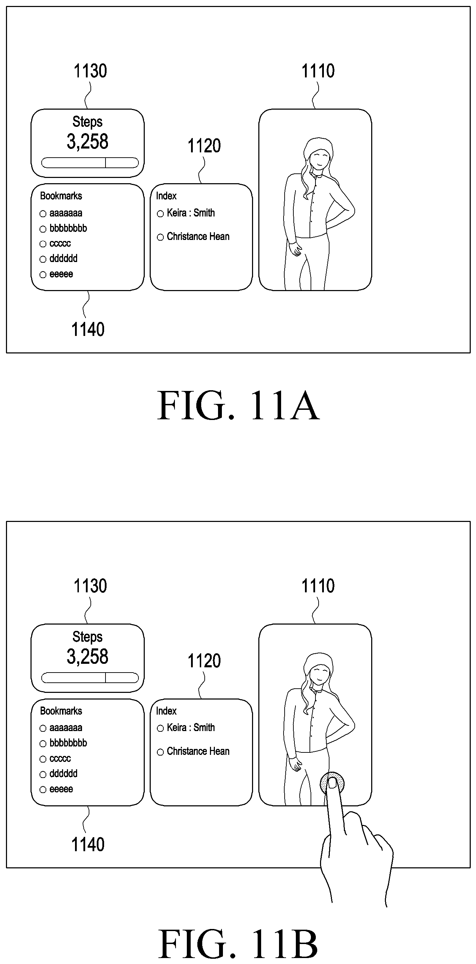

FIG. 10 is an example view illustrating a function or operation in which a wearable device 200 according to various embodiments of the disclosure sets an attribute of a virtual object (e.g., the first virtual object 1110) as a movement attribute based on a user input (e.g., a long touch input) to a virtual object (e.g., the first virtual object 1110, the second virtual object 1120, the third virtual object 1130, and/or the fourth virtual object 1140) displayed to determine a widget to be displayed on a home screen. FIGS. 11A to 11C are exemplary views illustrating the function or operation described in FIG. 10 from the perspective of a user interface.

Referring to FIG. 10, in operation 1010, the wearable device 200 according to various embodiments of the disclosure may display the at least one virtual object (e.g., the first virtual object 1110, the second virtual object 1120, the third virtual object 1130, and/or the fourth virtual object 1140) for determining at least one widget to be displayed on the home screen. The wearable device 200 according to various embodiments of the disclosure may display the at least one virtual object (e.g., the first virtual object 1110, the second virtual object 1120, the third virtual object 1130, and/or the fourth virtual object 1140) for determining at least one widget (e.g., a widget corresponding to a gallery application) to be displayed on the home screen (e.g., a screen including at least one application icon and/or at least one widget, displayed when it is identified that the wearable device 200 is worn), as illustrated in FIG. 11A.

In operation 1020, the wearable device 200 according to various embodiments of the disclosure may obtain a user input (e.g., a long touch input) to the at least one virtual object (e.g., the first virtual object 1110). At least one virtual object (e.g., the first virtual object 1110) according to various embodiments of the disclosure may include a virtual object for displaying the widget corresponding to the gallery application on the home screen.

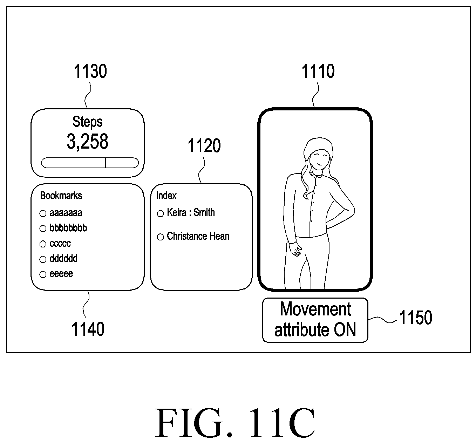

In operation 1030, the wearable device 200 according to various embodiments of the disclosure may determine the attribute of the at least one virtual object (e.g., the first virtual object 1110) as the movement attribute. The wearable device 200 according to various embodiments of the disclosure may identify the widget corresponding to the gallery application as the widget having the movement attribute when the gallery application is displayed as a widget based on obtaining a user input according to operation 1020. As illustrated in FIG. 11C, the wearable device 200 according to various embodiments of the disclosure may display a notification (e.g., the third notification 1150) indicating that the attribute of the widget corresponding to a specific application is set as a widget having the movement attribute as a virtual object.

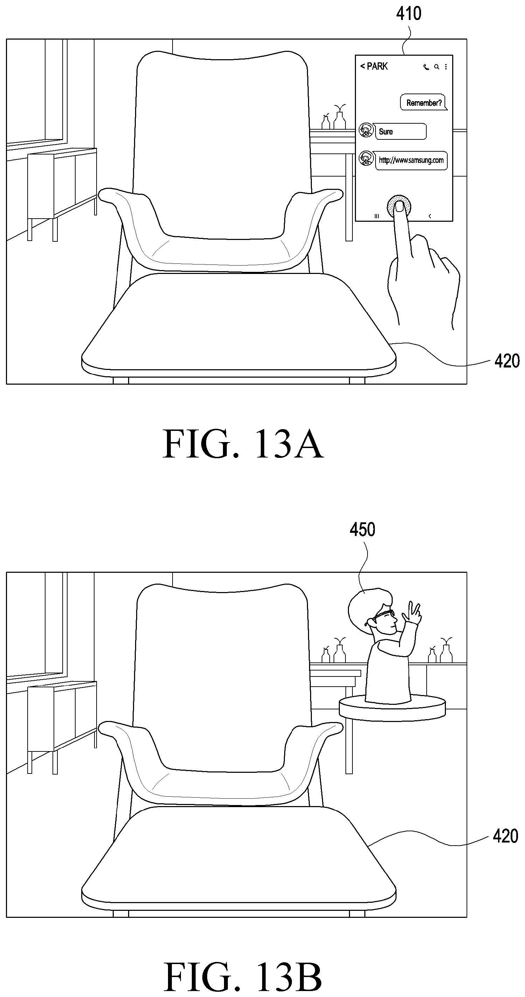

FIG. 12 is an example view illustrating a function or operation in which a wearable device 200 according to various embodiments of the disclosure determines an attribute of a virtual object (e.g., the message application execution screen 410) as a movement attribute or a non-movement attribute based on whether the shape of the virtual object (e.g., the message application execution screen 410) is changed. FIGS. 13A to 13C are exemplary views illustrating the function or operation described in FIG. 12 from the perspective of a user interface.

Referring to FIG. 12, in operation 1210, the wearable device 200 according to various embodiments of the disclosure may display the execution screen 410 of the first application (e.g., a message application) as a virtual object. As illustrated in FIG. 4A, the wearable device 200 according to various embodiments of the disclosure may display the execution screen 410 of the first application (e.g., a message application) as a virtual object.

In operation 1220, the wearable device 200 according to various embodiments of the disclosure may determine whether the execution screen 410 of the first application is moved around the first real object 420 after changing the shape. When a user input (e.g., a long touch input) is obtained for the execution screen (e.g., the message application execution screen 410) of the first application as illustrated in FIG. 13A, the wearable device 200 according to various embodiments of the disclosure may change the shape of the execution screen (e.g., the message application execution screen 410) of the first application into the second shape (e.g., changes into the second widget 450) as illustrated in FIG. 13B. The wearable device 200 according to various embodiments of the disclosure may determine whether the virtual object is moved around the real object 420 after obtaining such a user input (e.g., a long touch input).

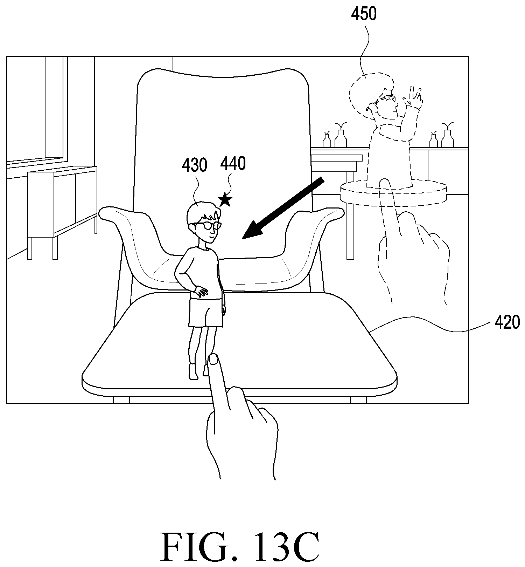

In operation 1230, when determining that the execution screen 410 of the first application is moved around the first real object 520 after changing the shape (e.g., operation 1220-Yes), the wearable device 200 according to various embodiments of the disclosure may determine the attribute of the virtual object (e.g., the first widget 430) having the first shape as the movement attribute. When it is identified that the first application execution screen (e.g., the message application execution screen 410) changed into the second shape (e.g., the message application execution screen 410) is moved onto the first real object 420 as illustrated in FIG. 13C, the wearable device 200 according to various embodiments of the disclosure may change the virtual object (e.g., the second widget 450) having the second shape into a virtual object (e.g., the first widget 430) having the first shape. The wearable device 200 according to various embodiments of the disclosure may display the first indicator 440 indicating that the virtual object (e.g., the first widget 430) having the first shape has the movement attribute around the virtual object (e.g., the first widget 430) having the first shape.

In operation 1240, when determining that the execution screen 410 of the first application is moved around the first real object 420 without changing the shape (e.g., operation 1220-No), the wearable device 200 according to various embodiments of the disclosure may change it into the virtual object (e.g., the first widget 430) having the first shape around the first real object 420 and determine the attribute of the virtual object (e.g., the first widget 430) having the first shape as the movement attribute.

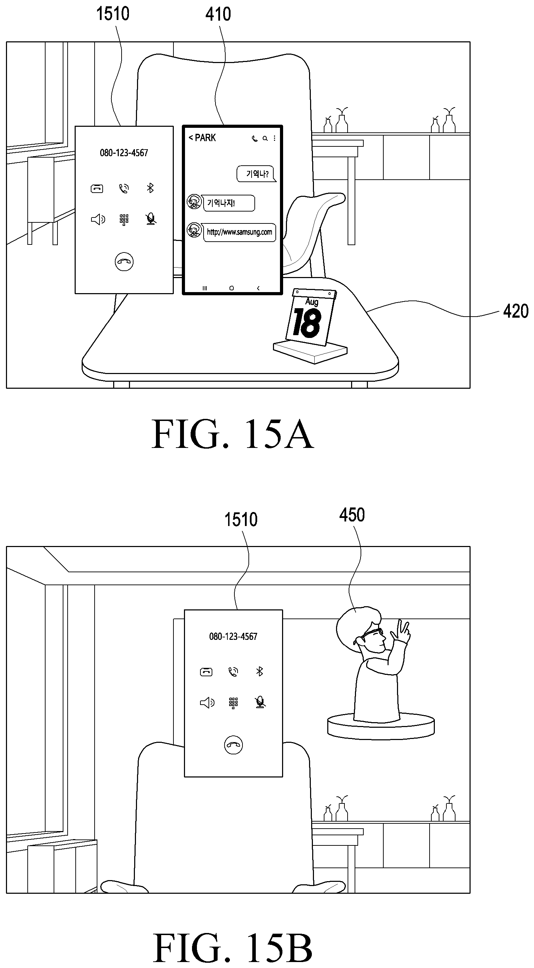

FIG. 14 is an example view illustrating a function or operation in which a wearable device 200 according to various embodiments of the disclosure changes the shape of an application execution screen (e.g., the message application execution screen 410) based on whether the application execution screen (e.g., the message application execution screen 410) is activated and sets the attribute of the application execution screen (e.g., the second widget 450) having the changed shape as a movement attribute. FIGS. 15A to 15C are exemplary views illustrating the function or operation described in FIG. 14 from the perspective of a user interface.

Referring to FIG. 14, the wearable device 200 according to various embodiments of the disclosure may identify the user's movement while at least one application execution screen (e.g., the message application execution screen 410) is activated in operation 1410. The wearable device 200 according to various embodiments of the disclosure may determine that the execution screen of a specific application is active when it is identified that the gaze of the user wearing the wearable device 200 faces to the execution screen of the specific application for a specified time or longer. When a user input (e.g., a virtual touch input) to the execution screen of the specific application is obtained by the user wearing the wearable device 200, the wearable device 200 according to various embodiments of the disclosure may determine that the execution screen of the specific application is active. The wearable device 200 according to various embodiments of the disclosure may determine that the execution screen of the specific application is active when an interaction between the execution screen of the specific application and the user is being performed (e.g., when the user is writing a message to be transmitted to the counterpart through the execution screen of the message application). FIG. 15A illustrates that the execution screen 410 of the message application is determined to be active out of the execution screen 1510 of the call application and the execution screen 410 of the message application according to various embodiments of the disclosure.

In operation 1420, the wearable device 200 according to various embodiments of the disclosure may change the shape of the activated application execution screen (e.g., the execution screen 410 of the message application). The wearable device 200 according to various embodiments of the disclosure may change the activated application execution screen (e.g., the message application execution screen 410) into a virtual object (e.g., the second widget 450) having the second shape when the posture of the user wearing the wearable device 200 is changed as illustrated in FIG. 15B. In this case, the display position of the execution screen of another application (e.g., the call application execution screen 1510) may be fixed according to the user's gaze and displayed in the real world (e.g., body-locked and displayed). The term 'body-lock' mentioned in the disclosure may refer to a function or operation in which the at least one virtual object is fixed and displayed at a specified portion within the user's field of view and/or in a specified portion within the user's field of view despite a change in the user's movement and/or the user's gaze. In operation 1430, the wearable device 200 according to various embodiments of the disclosure may move the changed application execution screen (e.g., the second widget 450) according to the movement of the wearable device 200. The wearable device 200 according to various embodiments of the disclosure may control the display module (e.g., the light output module 211) to fix and display the changed application execution screen (e.g., the second widget 450) at a specified position of the field of view of the wearable device 200 to move and display the changed application execution screen (e.g., the second widget 450) according to the movement of the wearable device 200 while the wearable device 200 moves as illustrated in FIG. 15B.

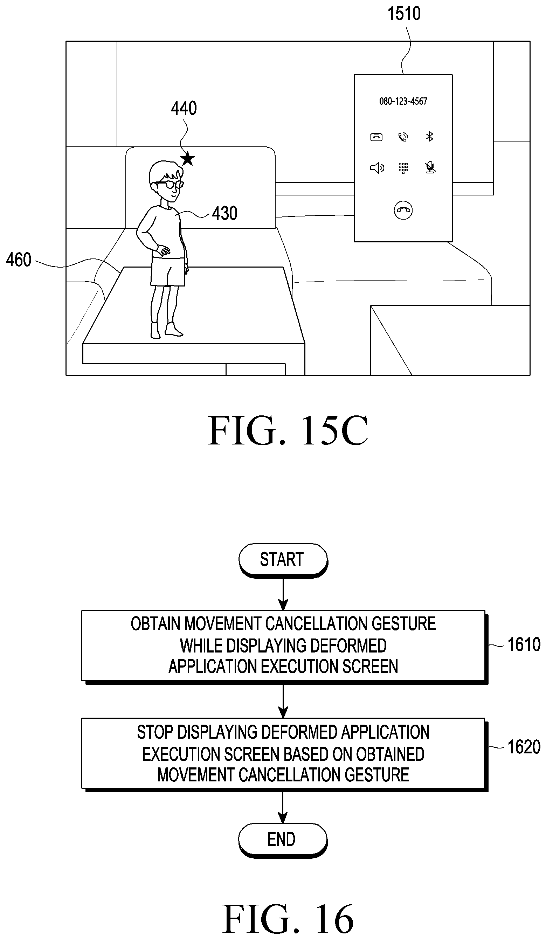

The wearable device 200 according to various embodiments of the disclosure may determine whether the movement of the wearable device 200 is terminated in operation 1440. The wearable device 200 according to various embodiments of the disclosure may display the changed application execution screen (e.g., the first widget 430) around the first real object 420 when determining (e.g., operation 1440-Yes) that the movement of the wearable device 200 is terminated in operation 1450. The wearable device 200 according to various embodiments of the disclosure may determine whether the movement of the wearable device 200 is terminated using at least one sensor (e.g., a gyro sensor, an acceleration sensor, and/or a GPS sensor). When the movement of the wearable device 200 is terminated, the wearable device 200 according to various embodiments of the disclosure may determine whether another real object (e.g., a desk, as the second real object 460) having the same or similar attribute (e.g., whether the real object has a plane with a specified area or more) to the first real object 420 (e.g., a desk) is present based on an image obtained through at least one camera (e.g., the second camera module 253 and/or the third camera module 255). The wearable device 200 according to various embodiments of the disclosure may display the at least one virtual object (e.g., the first widget 430) having the first shape around the second real object 460 (e.g., on the second real object 460) when there is another real object having the same or similar attribute (e.g., whether the real object has a plane with a specified area or more) to the first real object 420 (e.g., a desk) as illustrated in FIG. 15C.

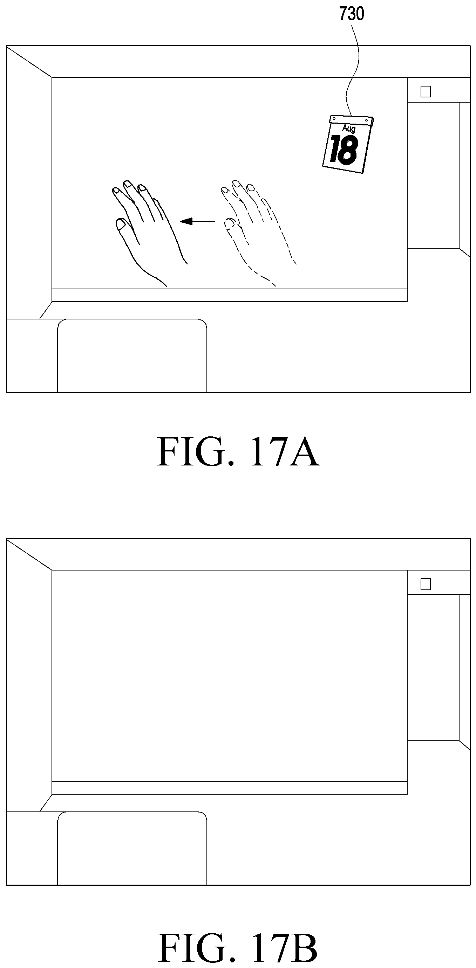

FIG. 16 is an example view illustrating a function or operation in which a wearable device 200 according to various embodiments of the disclosure stops displaying a changed application execution screen (e.g., the second widget 450 and/or the fifth widget 730) based on obtaining a movement cancellation gesture. FIGS. 17A and 17B are example views illustrating a function or operation described in connection to FIG. 16 from a user interface perspective.

Referring to FIG. 16, in operation 1610, the wearable device 200 according to various embodiments of the disclosure may obtain a movement cancellation gesture while displaying the changed application execution screen (e.g., the second widget 450 and/or the fifth widget 730). The wearable device 200 according to various embodiments of the disclosure may stop displaying the changed application execution screen based on the obtained movement cancellation gesture in operation 1620. The movement cancellation gesture according to various embodiments of the disclosure may include a gesture of moving the user's bod portion (e.g., a hand) in a specified direction (e.g., left or right), as illustrated in FIG. 17A. When the wearable device 200 according to various embodiments of the disclosure detects a gesture of moving the user's body portion in a first specified direction (e.g., left direction) while the movement of the wearable device 200 is identified, the wearable device 200 may release the movement attribute of the widget (e.g., the second widget 450 and/or the fifth widget 730) without displaying the widget (e.g., the second widget 450 and/or the fifth widget 730) anymore, as illustrated in FIG. 17B. The wearable device 200 according to various embodiments of the disclosure may no longer display the widget (e.g., the second widget 450 and/or the fifth widget 730) when detecting a gesture of moving the user's body portion in a second specified direction (e.g., the right direction) while the movement of the wearable device 200 is identified. The wearable device 200 according to various embodiments of the disclosure may detect that the movement of the wearable device 200 is terminated. Based on detecting that the movement of the wearable device 200 according to various embodiments of the disclosure is terminated, it is possible to display at least one virtual object (e.g., the message application execution screen 410 and/or the first widget 430) around another real object (e.g., a desk as the second real object 460) having the same or similar attribute (e.g., whether the real object has a plane with a specified area or more) to the first real object 420 (e.g., a desk).

Although various embodiments of the disclosure have been described herein with reference to the wearable device 200 configured to provide augmented reality, according to various embodiments of the disclosure, various embodiments of the disclosure may also be provided through a wearable device 200 configured to provide virtual reality. For example, various embodiments of the disclosure may be provided through a video see-through (VST) device (e.g., the device illustrated in FIGS. 2D and 2E). In this case, while providing an image for real world obtained by at least one camera of the wearable device 200 or an image for a specified virtual reality, the wearable device 200 according to various embodiments of the disclosure may apply various embodiments of the disclosure described above to at least one widget included in the image for the real world or the image for the virtual reality in the same or similar manner.

A wearable device 200 according to various embodiments of the disclosure may comprise at least one sensor, a display module (e.g., the light output module 211), and at least one processor (e.g., the processor 120). The at least one processor may be configured to display, using the display module, at least one virtual object having a first shape around a first real object in a real world, identify a movement of a user wearing the wearable device using the at least one sensor, based on identifying the user's movement, determine whether the at least one virtual object having the first shape has a movement attribute, and, based on determining that the at least one virtual object having the first shape has the movement attribute, control the display module to display the first shape as a second shape related to the first shape,. The at least one virtual object having the second shape may be moved and displayed according to the user's movement.

A method for controlling a wearable device 200 according to various embodiments of the disclosure may comprise displaying, using a display module of the wearable device, at least one virtual object having a first shape around a first real object in a real world, identifying a movement of a user wearing the wearable device using at least one sensor of the wearable device, based on identifying the user's movement, determining whether the at least one virtual object having the first shape has a movement attribute, and, based on determining that the at least one virtual object having the first shape has the movement attribute, controlling the display module to display the first shape as a second shape related to the first shape,. The at least one virtual object having the second shape may be moved and displayed according to the user's movement.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor (e.g., the processor 2520) of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device, comprising:
at least one sensor,
a display module, and
at least one processor; and
memory storing instructions, wherein the instructions, when executed, cause the at least one processor to:
display, using the display module, at least one virtual object having a first shape around a first real object in a real world;
identify a movement of a user wearing the wearable device using the at least one sensor;
based on identifying the user's movement, determine whether the at least one virtual object having the first shape has a movement attribute;
based on determining that the at least one virtual object having the first shape has the movement attribute, control the display module to display the first shape as a second shape related to the first shape, wherein the second shape includes a shape substantially the same as or different from the first shape; and
based on determining whether the movement of the user is terminated, control the display module to display at least one virtual object having the first shape around a second real object in the real world.

2. The wearable device of claim 1, wherein the at least one virtual object having the second shape is displayed fixedly at a specified position within a field of view of the wearable device according to a movement of the wearable device or according to the user's gaze.

3. The wearable device of claim 1 or 2, wherein the at least one virtual object having the first shape corresponds to an execution screen of a specified application.

4. The wearable device of any one of claims 1 to 3, wherein the instructions include an instruction to control the display module to display an indicator indicating that the at least one virtual object having the first shape has the movement attribute around the at least one virtual object having the first shape, when the at least one virtual object having the first shape has the movement attribute.

5. The wearable device of any one of claims 1 to 4, wherein the instructions include an instruction to, based on determining that the at least one virtual object having the first shape does not have the movement attribute, display the virtual object having the first shape at a fixed position regardless of the user's movement.

6. The wearable device of any one of claims 1 to 5, wherein the instructions include an instruction to control the display module to, based on a user input to move the execution screen of the application around the first real object, change the execution screen of the application to the at least one virtual object having the first shape and display the changed execution screen.

7. The wearable device of any one of claims 1 to 6, wherein the instructions include instructions to control the display module to:
display the at least one virtual object having the first shape and having the movement attribute in a first area of the first real object; and
display the at least one virtual object having the first shape and not having the movement attribute in a second area of the first real object.

8. The wearable device of any one of claims 1 to 7, wherein the instructions include instructions to:
identify an event that occurs for a specified application corresponding to the at least one virtual object having the second shape while the at least one virtual object having the second shape is displayed, and
based on the identified event, control the display module to display information about the identified event together with the at least one virtual object having the second shape.

9. The wearable device of any one of claims 1 to 8, wherein at least a portion of the first real object and at least a portion of the second real object include a plane where the at least one virtual object having the first shape can be displayed.

10. The wearable device of any one of claims 1 to 9, wherein the instructions include instructions to, based on identifying a user gesture giving the movement attribute to the virtual object not having the movement attribute, change an attribute of the virtual object not having the movement attribute.

11. A method, comprising:
displaying, using a display module of a wearable device, at least one virtual object having a first shape around a first real object in a real world;
identifying a movement of a user wearing the wearable device using at least one sensor of the wearable device;
based on identifying the user's movement, determining whether the at least one virtual object having the first shape has a movement attribute; and
based on determining that the at least one virtual object having the first shape has a movement attribute, controlling the display module to change and display the at least one virtual object having the first shape into a second shape different from the first shape, wherein the at least one virtual object having the second shape is moved and displayed according to the user's movement.

12. The method of claim 11, further comprising:
determining whether the user's movement is terminated using the at least one sensor; and
controlling the display module to, based on determining whether the user's movement is terminated, change the at least one virtual object having the second shape to the first shape and display the at least one virtual object around a second real object in the real world.

13. The method of claim 11 or 12, wherein the at least one virtual object having the first shape corresponds to an execution screen of a specified application.

14. The method of any one of claims 11 to 13, further comprising controlling the display module to display an indicator indicating that the at least one virtual object having the first shape has the movement attribute around the at least one virtual object having the first shape, when the at least one virtual object having the first shape has the movement attribute.

15. The method of any one of claims 11 to 14, further comprising, based on determining that the at least one virtual object having the first shape does not have the movement attribute, displaying the at least one virtual object at a fixed position regardless of the user's movement.
